(19) Europäisches Patentamt
European Patent Office
Office européen des brevets

(11) **EP 1 986 764 B1**

(12) **FASCICULE DE BREVET EUROPEEN**

(45) Date de publication et mention
de la délivrance du brevet:
**10.08.2016 Bulletin 2016/32**

(51) Int Cl.:
***B01D 53/12*** *(2006.01)*  ***B01J 8/26*** *(2006.01)*

(21) Numéro de dépôt: **06709372.4**

(22) Date de dépôt: **23.02.2006**

(86) Numéro de dépôt international:
**PCT/FR2006/000415**

(87) Numéro de publication internationale:
**WO 2007/096492 (30.08.2007 Gazette 2007/35)**

(54) **GROUPE D'AU MOINS DEUX REACTEURS A FLUX DE GAZ ALIMENTES EN UN AGENT DE SORPTION ET/OU DE NEUTRALISATION CHIMIQUE**

GRUPPE AUS MINDESTENS ZWEI GASSTROMREAKTOREN, DIE MIT CHEMISCHEN NEUTRALISIERUNGS- UND/ODER SORPTIONSMITTELN VERSORGT WERDEN

GROUP OF AT LEAST TWO GAS-FLOW REACTORS SUPPLIED WITH CHEMICAL NEUTRALIZATION AND/OR SORPTION AGENT

(84) Etats contractants désignés:
**DE FR IT**

(43) Date de publication de la demande:
**05.11.2008 Bulletin 2008/45**

(73) Titulaire: **SOLIOS Environnement**
**78100 Saint-Germain-en-Laye (FR)**

(72) Inventeurs:
• **CLOUTIER, Bernard**
**Quebec (CA)**

• **MALARD, Thierry**
**F-95290 L'Isle-Adam (FR)**

(74) Mandataire: **Cabinet Plasseraud**
**66, rue de la Chaussée d'Antin**
**75440 Paris Cedex 09 (FR)**

(56) Documents cités:
**WO-A-96/15846      WO-A-97/12659**
**US-A- 2 522 426     US-A- 3 093 465**
**US-A- 4 501 599     US-A- 5 603 907**

**Description**

La présente invention porte sur un groupe d'au moins deux réacteurs à flux de gaz, de préférence ascendant, alimentés en un agent de sorption et/ou de neutralisation chimique du type matière pulvérulente apte à adsorber et/ou neutraliser chimiquement des effluents présents dans le flux gazeux par la mise en contact de l'agent de sorption et/ou de neutralisation chimique avec le flux gazeux.

Il est d'intérêt aussi bien économique qu'écologique de séparer les effluents polluants présents dans des flux gazeux issus d'installations industrielles avant rejet de ces flux dans l'atmosphère. Par ailleurs, ces effluents polluants peuvent être des produits chimiques éventuellement valorisables.

Afin d'épurer des flux gazeux, il est connu d'utiliser des réacteurs verticaux de mise en contact d'agents de sorption et/ou de neutralisation chimique du type matières pulvérulentes, notamment d'agents de neutralisation chimique et/ou physique d'au moins un effluent, aptes à épurer des flux gazeux circulant dans les réacteurs, ces réacteurs étant alimentés par des dispositifs de distribution d'agents de sorption et/ou de neutralisation chimique et comprenant des moyens de répartition d'au moins un agent de sorption et/ou de neutralisation chimique dans le flux gazeux correspondant, ainsi que des moyens de collecte et d'évacuation de l'agent de sorption et/ou de neutralisation chimique chargé en effluents après mise en contact avec le flux gazeux.

Il est entendu dans la suite de la description par « réacteur » toute enceinte dans laquelle a lieu une réaction par mise en contact d'un agent de sorption et/ou de neutralisation chimique avec un flux gazeux. Il peut ainsi s'agir d'un réacteur à lit fluidisé, de type connu en soi, dans lequel le gaz à traiter circule directement à travers un lit fluidisé de matières pulvérulentes. Alternativement, il s'agit d'une enceinte constituée de moyens de filtrage et de moyens de mise en contact de la matière pulvérulente avec le gaz à traiter.

L'effet résultant de cette mise en contact des flux gazeux, de préférence ascendants, dans ces réacteurs avec les particules de matières pulvérulentes a pour but, notamment, d'adsorber et/ou neutraliser les composés gazeux polluants et combiner les poussières avec ces particules.

Plus précisément, l'invention a pour objet l'épuration d'au moins un effluent polluant d'un flux gazeux préférentiellement ascendant, plus particulièrement un flux gazeux issu de cuves d'électrolyse d'aluminium ou de fours de cuisson d'anodes pour l'électrolyse d'aluminium, réacteur dans lequel est introduit et distribué un agent de neutralisation chimique et/ou physique des effluents polluants, par exemple de l'alumine fraîche, ou de la poudre de coke, afin de neutraliser par adsorption ou par réaction chimique, notamment des éléments fluorés, ou des goudrons, brais et autres éléments organiques, tels que des hydrocarbures aromatiques polycycliques.

La question se pose plus particulièrement quand il est nécessaire de séparer l'acide fluorhydrique (ou HF) des gaz résiduaires.

En effet, du fait de l'utilisation de fluorures complexes comme la cryolithe en tant que fondant dans l'électrolyse de l'aluminium, les gaz utilisés présentent des proportions relativement élevées en HF qui doivent par la suite être récupérés avant rejet vers l'atmosphère.

Ce problème de captation des composés fluorés a été déjà partiellement résolu dans l'art antérieur avec des efficacités et des coûts plus ou moins élevés.

Les techniques de séparation courantes utilisent des procédés de mise en contact des gaz avec un agent de sorption et/ou de neutralisation chimique par voie sèche, à l'aide notamment de matières pulvérulentes qui permettent une réaction rapide entre l'agent de sorption et/ou de neutralisation chimique et les gaz entraînant une meilleure épuration, des températures d'utilisation plus basses et une économie d'énergie.

Afin de diminuer les coûts en agents de sorption et/ou de neutralisation chimique du type alumine, il a été décrit dans la demande FR 2 139 648, un procédé pour l'adsorption de fluor gazeux sur des particules d'alumine, les particules d'alumine étant mises en suspension dans une colonne d'aspiration traversée par le flux gazeux, les particules d'alumine sortant de la colonne d'aspiration étant par la suite pour une part recyclées dans la colonne d'aspiration et pour une autre part dirigées dans des moyens de stockage avant utilisation dans les cuves d'électrolyse, éventuellement après mélange avec de l'alumine fraîche. Il est ainsi couramment connu de recycler de l'alumine dans un seul réacteur ou de la renvoyer dans les moyens de stockage avant utilisation dans les cuves d'électrolyse.

Sur ce même principe, il est réalisé dans la demande de brevet FR 2 692 497 un dispositif pour le traitement d'un gaz par mise en contact avec des particules solides, ce dispositif étant constitué par un réacteur placé à l'intérieur d'un filtre à poches ou à manches, équipé d'une trémie où sont collectées les particules séparées du courant traité. Les gaz à traiter sont amenés dans le réacteur par un conduit vertical pénétrant dans la partie inférieure du réacteur à travers le fond de la trémie qui est perméable à l'air, un caisson placé sous le fond alimenté en air comprimé maintenant en état de fluidisation les particules contenues dans la partie inférieure de la trémie.

Les particules contenues dans la trémie dans un état fluidisé sont récupérées du fait de l'existence d'un trop plein à seuil ajustable permettant de régler la hauteur du lit fluidisé. Les particules évacuées par le trop plein sont collectées et recyclées pour une part dans le même réacteur et pour une autre part dirigées dans des moyens de stockage avant utilisation dans les cuves d'électrolyse.

Ainsi, selon cet art antérieur, afin d'améliorer le rendement, une partie de l'alumine chargée en composants fluorés est ré-injectée dans le réacteur.

Néanmoins, un des problèmes avec l'art antérieur est qu'il est nécessaire d'utiliser de grandes quantités d'alumine fraîche pour obtenir une purification des flux gazeux avec un rendement élevé

Ainsi, il est présenté dans la demande de brevet FR 2 310 151 un dispositif et un procédé de traitement pour la séparation de produits nocifs présents dans des gaz résiduaires par mise en contact avec une matière adsorbante (ou adsorbant) solide.

Une fois l'agent de sorption et/ou de neutralisation chimique mis en contact avec le flux gazeux, cet agent doit être évacué tandis que le réacteur doit être alimenté régulièrement en agent de sorption et/ou de neutralisation chimique frais.

Toutefois, après mise en contact de l'agent de sorption et/ou de neutralisation chimique avec du gaz, l'agent de sorption et/ou de neutralisation chimique du gaz est réintroduit dans le courant gazeux à un point tel que la capacité de sorption de l'agent soit diminuée à un niveau tel qu'il est possible de retraiter l'agent de sorption et/ou de neutralisation chimique, de l'éliminer économiquement ou bien de le réutiliser dans un process aval.

Le principe à la base de ce procédé connu consiste en ce qu'une fraction de l'agent de sorption et/ou de neutralisation chimique circulant est prélevée et en ce qu'une fraction correspondante d'agent de sorption et/ou de neutralisation chimique frais est injectée dans le circuit.

Pour ce faire, le flux de gaz à épurer circule successivement à travers une pluralité de venturis après chacun desquels est monté un séparateur pour l'agent de sorption et/ou de neutralisation chimique qui est introduit dans le dernier venturi dans lequel circule le flux gazeux puis dans les venturis suivants dans le sens contraire du flux gazeux, le prélèvement en agent de sorption et/ou de neutralisation chimique étant effectué après le premier venturi pris dans le sens du courant.

Ainsi, il est obtenu un effet de contre courant aboutissant à un degré d'épuration élevé et un procédé économiquement intéressant.

Le brevet US 3 093 465 décrit une installation d'épuration d'un flux gazeux à trois réacteurs, dont un seul est un réacteur d'épuration, contenant un lit fluidisé d'un agent d'adsorption en matière pulvérulent finement divisée, telle que de l'alumine, traversé par le flux gazeux ascendant, qui est épuré par l'adsorption d'effluents par l'agent pulvérulent, dont des particules chargées d'effluents et entraînées par le flux gazeux épuré sortant du réacteur d'épuration sont séparées dudit flux gazeux dans un séparateur à cyclone et recyclées dans le réacteur d'épuration. De l'agent pulvérulent chargé d'effluents est transféré en continu du réacteur d'épuration à un réacteur de régénération à chaud de l'agent d'adsorption, dans lequel un lit fluidisé d'agent chargé d'effluents et provenant du réacteur d'épuration est traversé par un courant ascendant de gaz chaud de régénération, qui se charge d'effluents en déchargeant l'agent d'adsorption, dont des particules entraînées par le gaz de régénération sortant du réacteur de régénération sont séparées dudit gaz de régénération dans un séparateur et renvoyées dans le réacteur de régénération. De l'agent pulvérulent régénéré à chaud est transféré en continu du réacteur de régénération à un réacteur de refroidissement, dans lequel un lit fluidisé d'agent régénéré est refroidi en étant traversé par un courant ascendant d'un gaz froid, lequel entraîne des particules refroidies d'agent régénéré qui, à la sortie du réacteur de refroidissement, sont séparées du gaz de refroidissement par un séparateur centrifuge et renvoyées dans le réacteur de refroidissement, duquel de l'agent pulvérulent régénéré et refroidi est transféré en continu dans le flux gazeux à épurer entrant dans la base du réacteur d'épuration. Le gaz de régénération chaud sortant du réacteur de régénération et le gaz de refroidissement sortant du réacteur de refroidissement sont collectés dans une même conduite les menant à un refroidisseur suivi d'un séparateur d'eau et de condensats, puis à un compresseur, à la sortie duquel une fraction de ce courant gazeux est réchauffée dans un réchauffeur pour être utilisée comme gaz chaud de régénération, injecté dans la base du réacteur de régénération à chaud, et dont la fraction complémentaire est utilisée comme gaz de refroidissement, injecté dans la base du réacteur de refroidissement.

Il est également décrit dans le brevet EP 0 793 527 un procédé de séparation de substances d'un milieu gazeux par adsorption à sec à deux étages, le gaz circulant successivement à travers ces deux étages. Plus précisément, le procédé porte sur la séparation d'un gaz fluoré à partir d'un gaz émis lors de la production d'aluminium, les substances fluorées étant adsorbées sur de l'oxyde d'aluminium solide selon un processus d'adsorption à sec. Le gaz est traité dans un premier étage avec de l'oxyde d'aluminium qui a été partiellement usé. Celui-ci est alors séparé en aval du premier étage d'adsorption avant d'être pour une part réinjecté dans les cuves d'électrolyse et pour une autre part remise en circulation dans le premier étage d'adsorption. Le gaz préalablement partiellement épuré circule alors dans un deuxième étage d'adsorption où il est traité avec de l'oxyde d'aluminium particulaire réactif pratiquement non usé. Au moins une partie de l'oxyde d'aluminium particulaire est alors séparée en aval du second étage et est transférée vers le premier étage d'adsorption. Par ailleurs, le même gaz à traiter circule à travers deux étages d'adsorption pour obtenir l'épuration souhaitée.

De plus, les rendements obtenus avec l'art antérieur ne sont pas suffisamment élevés et les installations à mettre en oeuvre sont relativement lourdes à mettre en place.

Afin d'éviter de traiter les matières pulvérulentes en elles-mêmes, il a été également proposé, dans le cas particulier du traitement dé flux gazeux provenant de cuve d'électrolyse d'aluminium et de l'utilisation d'alumine comme agent de sorption et/ou de neutralisation chimique, de créer des turbulences dans le flux gazeux afin d'améliorer le mélange et le temps de contact entre le flux gazeux et l'agent de sorption et/ou de neutralisation chimique. Toutefois, ces turbulences favorisent la réduction de la taille des particules d'alumine par attrition, entraînant ainsi une perte de la qualité de l'alumine pulvérulente ce qui est défavorable au procédé de fabrication de l'aluminium par réinjection dans les cuves d'électrolyse de l'alumine récupérée après le traitement d'épuration et chargée de composés fluorés également nécessaire à l'électrolyse de l'aluminium.

Ainsi, ce mode de réalisation ne résout pas la totalité des problèmes précédemment soulevés, à savoir les coûts de production, les rendements et la quantité de déchets obtenus.

De plus, il a été constaté, dans le cas du traitement simultané de plusieurs réacteurs, des écarts de rendement de captation des effluents entre chaque réacteur.

Il serait ainsi particulièrement avantageux de réaliser une installation de traitement de flux gazeux permettant d'utiliser des quantités réduites d'agents d'adsorption, d'augmenter les rendements d'adsorption, de diminuer sensiblement les coûts et de traiter des flux gazeux en parallèle et non de traiter un même flux gazeux par passage successif de celui-ci dans une pluralité de réacteurs.

La présente invention se propose de résoudre les problèmes liés à l'art antérieur à l'aide d'une installation également dénommée centre de traitement des gaz permettant l'obtention d'une purification des flux gazeux élevée tout en utilisant des quantités de matières pulvérulentes réduites, améliorant le rendement d'épuration à quantité d'alumine constante et permettant d'obtenir un rendement constant indépendamment des conditions climatiques.

Pour ce faire, l'invention porte sur un groupe d'au moins deux réacteurs à flux de gaz, tel que défini dans la revendication 1.

Des modes de réalisation avantageux du groupe de réacteurs font l'objet des revendication 2 à 9.

De manière générale, l'invention porte sur un centre de traitement de gaz constitué d'au moins un groupe de réacteurs présentant l'une des caractéristiques précédentes.

Par ailleurs, l'invention porte également sur un procédé d'épuration d'un flux gazeux par mise en contact du flux avec un agent de sorption et/ou de neutralisation chimique du type matière pulvérulente à l'aide d'au moins un groupe d'au moins deux réacteurs alimentés en parallèle en flux gazeux, caractérisé en ce qu'il comprend une étape d'évacuation d'agent de sorption et/ou de neutralisation chimique, après mise en contact avec le flux gazeux dans au moins un des réacteurs, dans au moins un autre des au moins deux réacteurs dans lequel ledit agent, évacué est à nouveau mis en contact avec ledit flux gazeux. De manière plus spécifique et avantageuse, le procédé selon l'invention est utilisé avec, comme matière pulvérulente, de l'alumine $Al_2O_3$ qui est mise en contact avec un gaz issu de cuves d'électrolyse d'aluminium.

La présente invention est maintenant décrite à l'aide d'exemples uniquement illustratifs et nullement limitatifs de la portée de l'invention et à partir des illustrations ci-jointes dans lesquelles :

- la figure 1 est une représentation schématique d'un centre de traitement gazeux alimenté en matière pulvérulente selon l'art antérieur ;
- la figure 2 est une représentation schématique d'un centre de traitement gazeux alimenté en matière pulvérulente selon une première forme de réalisation de l'invention ;
- la figure 3 est une représentation schématique d'un centre de traitement gazeux alimenté en matière pulvérulente selon une deuxième forme de réalisation de l'invention ;
- la figure 4 est une représentation schématique d'un centre de traitement gazeux alimenté en matière pulvérulente selon une troisième forme de réalisation de l'invention ;
- la figure 5 est une représentation schématique d'un centre de traitement gazeux fonctionnant en partie selon l'art antérieur et en partie selon la deuxième forme de réalisation de l'invention, et
- la figure 6 est un histogramme représentant les quantités de HF rejetées après passage de flux gazeux dans le centre de traitement gazeux de la figure 5.

La présente invention porte sur un centre de traitement de gaz 1 constitué d'une pluralité de réacteurs ($2_1$, $2_2$,..., $2_n$) ayant la même capacité de traitement et dans lesquels circule en parallèle un flux gazeux 3, de préférence ascendant, devant être épuré en effluents, les réacteurs ($2_1$, $2_2$,..., $2_n$) étant alimentés parallèlement en un agent de sorption et/ou de neutralisation chimique du type matière pulvérulente, de type connue en soi, issue de moyens de stockage 4 de matières pulvérulentes, du type silo, et distribuées aux réacteurs ($2_1$, $2_2$,..., $2_n$) à l'aide de moyens de distribution 5 prévus entre les moyens de stockage 4 et les réacteurs ($2_1$, $2_2$,..., $2_n$).

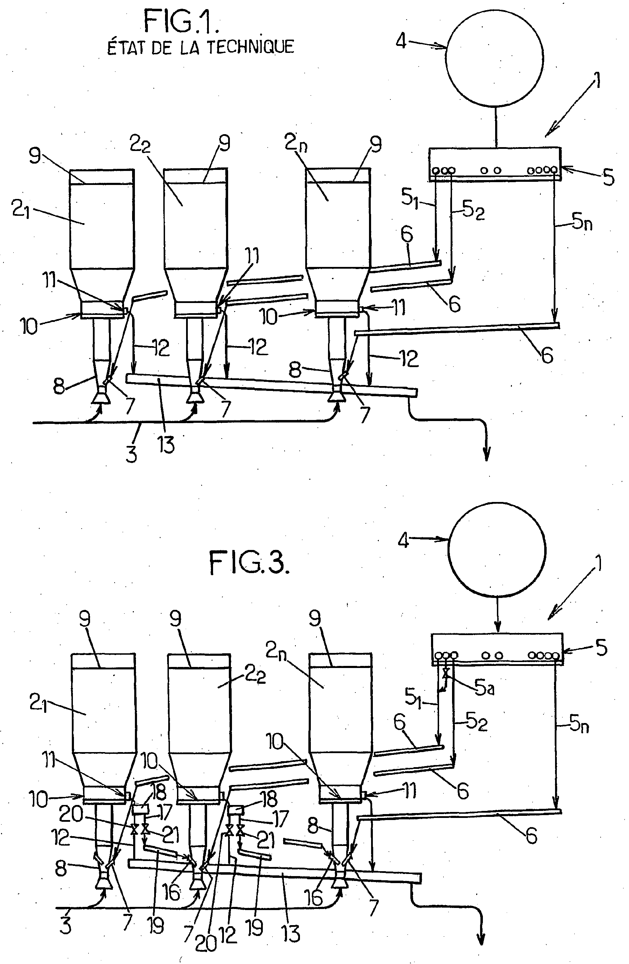

Par mesure de simplicité, il est uniquement représenté sur la figure 1 trois réacteurs ($2_1$, $2_2$,..., $2_n$), étant entendu que l'invention peut s'appliquer à tout centre de traitement gazeux comportant au moins deux réacteurs. Les réacteurs ($2_1$, $2_2$,..., $2_n$) sont particulièrement destinés à permettre la mise en contact, selon tout moyen connu dans l'art antérieur, de la matière pulvérulente avec un flux gazeux devant être épuré en effluents et/ou en poussières. De manière préférentielle, les réacteurs ($2_1$, $2_2$,..., $2_n$) sont tous identiques, c'est-à-dire qu'ils présentent la même capacité de traitement de flux. Néanmoins, l'homme du métier peut adapter le principe selon l'invention à tout type de groupe de réacteurs, que les réacteurs soient tous identiques ou non.

Le principe de l'invention s'applique plus particulièrement à des flux gazeux 3 issus de cuves d'électrolyse d'aluminium, les effluents polluants du type agents fluorés, par exemple de l'acide fluorhydrique, étant neutralisés par la matière pulvérulente, dans cet exemple de l'alumine $Al_2O_3$, par adsorption ou par réaction chimique.

Dans le centre de traitement de gaz selon la figure 1, les moyens de distribution 5 en matière pulvérulente sont avantageusement conçus pour alimenter de manière uniforme chacun des réacteurs ($2_1$, $2_2$,..., $2_n$) constitutifs du centre de traitement de gaz 1. Ainsi, si le centre 1 comporte n réacteurs et si les moyens de distribution 5 peuvent alimenter au total X tonnes par heure en matière pulvérulente, alors chacun des réacteurs ($2_1$, $2_2$,..., $2_n$) est alimenté avec un débit de X/n tonnes par heure.

De cette manière, puisque les réacteurs ($2_1$, $2_2$,..., $2_n$) reçoivent la même quantité de matière pulvérulente, alors le taux d'adsorption en effluents de chaque réacteur sera sensiblement égal, étant entendu que chaque réacteur ($2_1$, $2_2$,..., $2_n$) reçoit une même fraction d'un même flux gazeux 3.

De manière plus précise, une conduite d'alimentation 6 relie les moyens de distribution 5 à des moyens d'injection 7, de type connus en soi, de la matière pulvérulente dans le réacteur ($2_1$, $2_2$,..., $2_n$). Avantageusement, la conduite d'alimentation 6 est du type connu en soi, par exemple une aéroglissière, étant entendu que le transport de l'agent de sorption et/ou de neutralisation chimique du type matière pulvérulente entre les moyens de distribution 5 et le réacteur ($2_1$, $2_2$,..., $2_n$) est réalisé selon tout moyen connu dans l'art antérieur, par exemple selon un procédé pour le convoyage des matières pulvérulentes en lit hyperdense. Ces procédés et dispositifs de convoyage permettant de fluidiser les matières pulvérulentes sont connus dans l'art antérieur et ne font pas l'objet de la présente invention.

Il est en effet connu dans l'art antérieur de transporter des matières pulvérulentes d'un point à un autre à l'aide d'aérocanalisations fonctionnant sur le principe de formation d'un lit fluidisé de matières pulvérulentes par mise en contact avec un gaz de fluidisation.

Avantageusement, les moyens d'injection 7 sont placés sensiblement à l'entrée d'une tuyère 8 du réacteur ($2_1$, $2_2$,..., $2_n$) dans laquelle entre le flux de gaz 3.

Une fois la matière pulvérulente fraîche issue des moyens de stockage 4 injectée dans le réacteur ($2_1$, $2_2$,..., $2_n$), celle-ci est mise en contact avec le flux de gaz 3 par tout moyen connu en soi permettant une mise en contact optimale du flux gazeux 3 avec la matière pulvérulente aboutissant à une épuration optimale des effluents polluants présents dans le flux gazeux.

Lors de la mise en contact de la matière pulvérulente avec les flux gazeux 3, de préférence ascendants, les matières pulvérulentes sont entraînées dans le flux gazeux 3 selon un mouvement avantageusement ascendant.

Toutefois, chaque réacteur ($2_1$, $2_2$,..., $2_n$) présente des moyens de filtrage 9, par exemple du type filtre à tissu ou filtre à manches, empêchant le rejet dans l'atmosphère des grains de particules de matières pulvérulentes hors du réacteur ($2_1$, $2_2$,..., $2_n$).

Après mise en contact de l'agent de sorption et/ou de neutralisation chimique avec le flux gazeux 3 et le filtrage du flux 3 par les moyens de filtrage 9, il est prévu, dans des trémies en bas des filtres 9, des moyens de collecte 10, selon tout type connu en soi, des particules de matières pulvérulentes et reliées par des moyens connus en soi à des moyens d'évacuation 11 de l'agent de sorption et/ou de neutralisation chimique chargé en effluents accumulé dans le réacteur ($2_1$, $2_2$,..., $2_n$).

Il est en effet avantageusement prévu dans les réacteurs ($2_1$, $2_2$,..., $2_n$) des trémies de collecte constitutives des moyens de collecte 10 dans lesquelles sont aptes à être collectées les particules et où elles sont maintenues dans un état fluidisé. Ces trémies de collecte ont été précédemment décrites en rapport avec la demande de brevet FR 2 692 497 et sont de type connues en soi.

Les moyens d'évacuation 11 sont de type connus en soi et se présentent, par exemple, sous la forme d'un ou plusieurs orifice(s) relié(s) à une conduite d'évacuation 12 du type aéroglissière, chaque conduite d'évacuation 12 se déversant dans une conduite centrale 13 dans laquelle est déversée la totalité des agents de sorption et/ou de neutralisation chimique chargés en effluents évacués par l'ensemble des réacteurs ($2_1$, $2_2$,..., $2_n$).

Ainsi, dans le cas où de l'alumine fraîche est alimentée à chaque réacteur ($2_1$, $2_2$,..., $2_n$) d'un flux gazeux 3 devant être défluoré, il est obtenu dans la conduite centrale 13 de l'alumine fluorée qui est par la suite évacuée, soit dans des moyens de stockage (non représentés sur la figure mais de type connus en soi), soit dans les cuves d'électrolyse de l'aluminium pour y être recyclée.

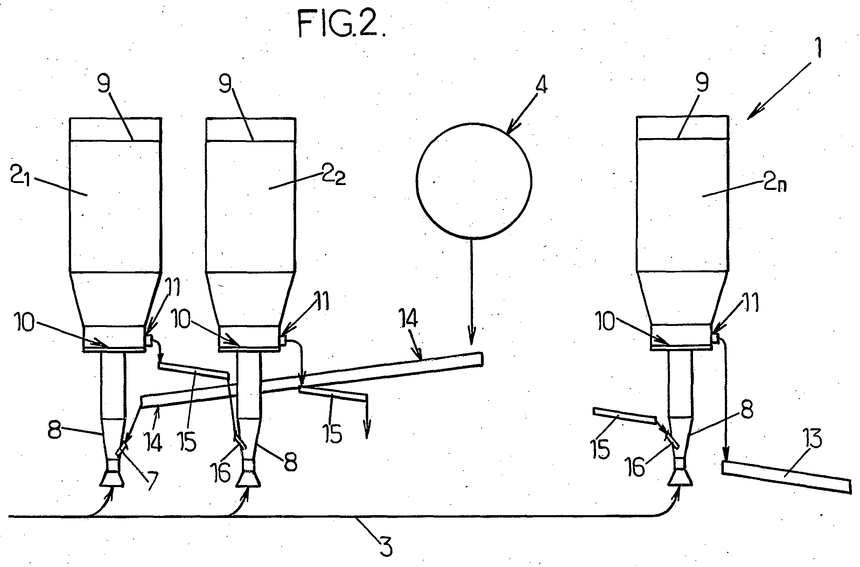

Il est représenté sur la figure 2 une première forme de réalisation du dispositif selon l'invention, les éléments identiques portant les mêmes numéros de référence tout au long de la description.

Selon ce mode de réalisation, les moyens de stockage 4 déversent l'agent de sorption et/ou de neutralisation chimique dans une unique aéroglissière d'alimentation 14 du type connue en soi, par exemple à lit fluidisé et déversant l'intégralité de son contenu dans un premier réacteur $2_1$.

Selon ce mode de réalisation, les (n-1) autres réacteurs ($2_2$,..., $2_n$) ne reçoivent pas d'agent de sorption et/ou de neutralisation chimique frais issu des moyens de stockage 4.

Le premier réacteur $2_1$ évacue alors la totalité de l'agent de sorption et/ou de neutralisation chimique chargé en effluents dans un second réacteur $2_2$ par l'intermédiaire des moyens d'évacuation 11 reliés à une aéroglissière d'évacuation 15 également avantageusement du type à lit fluidisé ou de tout type connu en soi permettant le transport de matières pulvérulentes ou d'agents de sorption et/ou de neutralisation chimique.

Selon ce mode de réalisation, il n'est pas nécessaire de prévoir des moyens de distribution 5 de l'agent de sorption et/ou de neutralisation chimique pour les n réacteurs puisque l'alimentation de l'agent de sorption et/ou de neutralisation chimique se fait uniquement pour le réacteur en début de chaîne $2_1$, l'agent de sorption et/ou de neutralisation chimique étant ensuite transporté d'un réacteur à un autre jusqu'au n-ième réacteur, l'agent de sorption et/ou de neutralisation chimique ne passant qu'une seule fois dans chaque réacteur ($2_1$, $2_2$,..., $2_n$) et passant successivement d'un réacteur à l'autre. Les réacteurs ($2_1$, $2_2$,..., $2_n$) sont ainsi alimentés en série en agent de sorption et/ou de neutralisation chimique chargé en effluents provenant pour chacun d'eux des moyens d'évacuation du réacteur ($2_1$, $2_2$,...,$2_{n-1}$) immédiatement en amont dans la série.

De cette manière, dans le cas de l'épuration d'acide fluorhydrique contenu dans des gaz résiduaires issus de cuves d'électrolyse d'aluminium, la quantité d'alumine fraîche séjourne un certain temps dans le premier réacteur $2_1$ où elle s'enrichit en fluorures avant de se déverser totalement dans un second réacteur $2_2$ où elle séjourne le même temps et continue à s'enrichir en fluorures et ainsi de suite jusqu'au n-ième réacteur $2_n$ où elle se déverse dans la conduite principale 13 d'alumine fluorée pour son recyclage dans des cuves d'électrolyse, par exemple, ou dans tout autre type de moyen de stockage ou de recyclage.

Il peut être prévu dans chacun des réacteurs ($2_1$, ..., $2_n$) un recyclage interne de l'agent de sorption et/ou de neutralisation chimique du fait notamment de la présence d'une trémie telle que précédemment décrite dans le brevet FR 2 692 497, par exemple.

De plus, il est prévu, dans le cas de l'arrêt du m-ième réacteur $2_m$, des moyens de dérivation, de type connus en soi, permettant de dériver la matière pulvérulente chargée en effluents directement du (m-1)-ième réacteur $2_{m-1}$ au (m+1)-ième réacteur $2_{m+1}$. Avantageusement, ces moyens de dérivation permettent également la dérivation de plusieurs réacteurs hors service situés les uns à la suite des autres dans la cascade de n réacteurs. Dans ces cas d'arrêts d'un ou plusieurs réacteurs ($2_1$, ..., $2_n$), des moyens de coupure de l'arrivée en flux gazeux 3 dans ces réacteurs ($2_1$, ..., $2_n$) sont également prévus.

L'aéroglissière d'évacuation 15 déverse son contenu dans des moyens d'injection 16 du même type que les moyens d'injection 7 en agent de sorption et/ou de neutralisation chimique frais tels que précédemment décrit.

Par ailleurs pour tenir compte des variations de caractéristiques de l'agent de sorption et/ou de neutralisation chimique, des moyens anti-abrasion de type connus en soi peuvent être prévus pour les premiers réacteurs recevant cet agent.

Ainsi, seul le n-ième réacteur $2_n$ est relié à une conduite principale 13 où l'agent de sorption et/ou de neutralisation chimique, chargée en effluents après son passage dans les n réacteurs, est déversé.

La figure 3 est une vue schématique d'une seconde forme de réalisation d'un centre de traitement de gaz selon l'invention.

Selon la deuxième forme de réalisation de l'invention, il est ajouté, au centre de traitement de gaz 1 tel que décrit à la figure 1, une seconde conduite d'évacuation 17 en sortie des moyens d'évacuation 11 de l'agent de sorption et/ou de neutralisation chimique chargé en effluents.

Plus précisément, les moyens d'évacuation 11 sont connectés à un diviseur 18, de type connu en soi, connecté à la première conduite d'évacuation 12, celle-ci déversant l'agent de sorption et/ou de neutralisation chimique y circulant directement dans la conduite principale 13, telle que précédemment décrite, et connecté également à une seconde conduite 17, celle-ci déversant l'agent de sorption et/ou de neutralisation chimique y circulant directement dans des moyens de convoyage 19, du type aéroglissière secondaire, déversant son contenu dans un autre réacteur ($2_2$,..., $2_n$) du centre de traitement de gaz 1.

Les première 12 et seconde 17 conduites d'évacuation comportent respectivement une vanne (20, 21) permettant soit d'ouvrir la première conduite 12 et de fermer la seconde conduite 17 : dans ce cas, les réacteurs fonctionnent selon le mode de réalisation connu décrit dans la figure 1, soit de fermer la première conduite 12 et d'ouvrir la seconde conduite 17 : dans ce cas, les réacteurs fonctionnent selon la deuxième forme de réalisation de l'invention.

Ainsi, si on a n réacteurs, le principe à la base de la deuxième forme de réalisation de l'invention est qu'un réacteur $2_1$ soit alimenté exclusivement en agent de sorption et/ou de neutralisation chimique frais et qu'il déverse ensuite de l'agent de sorption et/ou de neutralisation chimique qu'il a reçu et qui s'y est chargé en effluents vers des moyens d'injection 16 d'un second réacteur $2_2$ qui à son tour déverse l'agent après mise en contact avec le gaz dans le second réacteur $2_2$ vers un troisième réacteur après épuration et ainsi de suite jusqu'au n-ième réacteur $2_n$, où l'agent de sorption et/ou de neutralisation chimique utilisé, filtré et collecté est déversé par les moyens d'évacuation 11 du n-ième réacteur $2_n$ dans la conduite centrale 13. A la différence du premier mode de réalisation de l'invention, les (n-1) autres réacteurs ($2_2$, ..., $2_n$) peuvent recevoir de l'agent de sorption et/ou de neutralisation chimique issu des moyens de stockage 4.

La seconde conduite d'évacuation 17 permet donc le transport de la matière pulvérulente d'un réacteur à un autre ($2_1$, ..., $2_n$) pour qu'ainsi de la matière pulvérulente puisse épurer successivement les flux gazeux 3 de plusieurs réacteurs ($2_2$,..., $2_n$).

De manière plus précise, le second réacteur $2_2$ reçoit de l'alumine fraîche issue des moyens de stockage 4 ainsi que de l'alumine chargée en effluents dans le premier réacteur $2_1$. Le troisième réacteur reçoit de l'alumine fraîche issue des moyens de stockage 4 ainsi que de l'alumine chargée en effluents dans le premier réacteur $2_1$ et chargée en effluents dans le second réacteur $2_2$. Ainsi, le troisième réacteur reçoit de l'alumine fraîche et de l'alumine chargée en effluents après son passage dans les premier et second réacteurs ($2_1$, $2_2$), Et ainsi de suite jusqu'au n-ième réacteur qui reçoit une fraction d'alumine après son passage dans 1, 2 jusqu'à n-1 réacteurs en plus de l'alumine fraîche issue des moyens de stockage 4.

Chaque aéroglissière secondaire 19 déverse son contenu dans un réacteur ($2_2$,..., $2_n$) par l'intermédiaire des moyens d'injection 16 en agents de sorption et/ou de neutralisation chimique, chargés en effluents, ces moyens d'injection 16 étant disposés sur la tuyère 8 à proximité du dispositif d'injection 7 en agents de sorption et/ou de neutralisation chimique frais issus des moyens de stockage 4.

Selon une variante de réalisation, les moyens d'injection 16 et le dispositif d'injection 7 sont mis en commun permettant ainsi le mélange de l'agent de sorption et/ou de neutralisation chimique frais avec l'agent de sorption et/ou de neutralisation chimique chargé en effluents avant l'injection dans le réacteur ($2_2$,..., $2_n$).

Ainsi, les moyens d'injection 16 en agents de sorption et/ou de neutralisation chimique chargés en effluents sont sensiblement placés en entrée du flux gazeux dans le réacteur ($2_2$,..., $2_n$).

Par ailleurs, le premier réacteur $2_1$ reçoit une quantité supérieure d'agent de sorption et/ou de neutralisation chimique par rapport aux (n-1) autres réacteurs grâce à la présence d'une vanne 5a en sortie des moyens de distribution 5 apte à être ouverte ou fermée et déversant ce surplus d'agent de sorption et/ou de neutralisation chimique dans la conduite d'alimentation 6 reliée au premier réacteur $2_1$.

En considérant n réacteurs identiques et une alimentation globale d'alumine fraîche de X tonnes par heure pour le centre de traitement de gaz, chaque réacteur reçoit X/n tonnes par heure d'alumine fraîche dans le cas où la vanne 20 de la première conduite 12 est ouverte et où la vanne 21 de la seconde conduite 17 est fermée ainsi que la vanne 5a. Ce mode de fonctionnement est identique au mode de fonctionnement décrit dans la figure 1.

Selon un exemple de réalisation de l'invention et afin de conserver les débits, dans le cas où la vanne 20 de la première conduite 12 est fermée et où la vanne 21 de la seconde conduite 17 est ouverte, la suralimentation du premier réacteur $2_1$ par la vanne 5a ouverte correspond à un débit de [X/n][(n-1)/(n+1)] tonnes par heure. Ainsi, le débit dans la conduite d'alimentation 6 reliée au premier réacteur $2_1$ est de [X/n + [X/n][(n-1)/(n+1)]] tonnes par heure. Ensuite, chacun des autres réacteurs ($2_2$,...., $2_n$) du groupe est alimenté en agent de sorption et/ou de neutralisation chimique dans une quantité qui est une partie de la fraction d'agent de sorption et/ou de neutralisation chimique alimentant le réacteur suralimenté en agent de sorption et/ou de neutralisation chimique. Préférentiellement, chacun des autres réacteurs ($2_2$,...., $2_n$) du groupe est alimenté en agent de sorption et/ou de neutralisation chimique dans une quantité qui est la moitié de la fraction d'agent de sorption et/ou de neutralisation chimique alimentant le réacteur suralimenté en agent de sorption et/ou de neutralisation chimique. Ainsi, dans ce cas préférentiel, chacun des autres réacteurs reçoit un débit de [X/n + [X/n][(n-1)/(n+1)]]/2 tonnes par heures.

De manière générale, si l'on note $B_i$ le débit d'alumine fraîche (en tonne par heure) fourni par les moyens de distribution 5 au réacteur i (avec i entier compris entre 1 et n) et $\overline{M}$ le débit moyen équi-réparti en tonne par heure, le débit d'alumine fraîche par réacteur peut être écrit avec les formules suivantes :

- Selon l'art antérieur tel que décrit dans la figure 1 :

$$B_i = \frac{X}{n} = \overline{M} \ \text{(pour tout i)}$$

- Selon le mode de fonctionnement de la présente invention tel que décrit dans les figures 2 et 3 :

$$B_1 = f_1 . \ \overline{M} \ \text{avec } 1 \leq f_1 \leq n$$

$$B_i = f_i . \ \overline{M} \ \text{avec } 0 \leq f_i \leq 1 \text{ pour } 2 \leq i \leq n$$

Avec $\sum_{i=1}^{i=n} f_i = n$ et avec $f_i$ réel positif ou nul

Dans le mode de réalisation en cascade tel que décrit dans la figure 2 avec une alimentation exclusive dans le premier réacteur $2_1$, on a alors $f_1=n$ et $f_i=0$ pour $2 \leq i \leq n$.

Selon un mode de fonctionnement alternatif, il est possible que les vannes (20, 21) soient partiellement ouvertes permettant un mode de fonctionnement dit « mixte » du centre de traitement de gaz 1, c'est-à-dire qu'une partie de l'agent de sorption et/ou de neutralisation chimique chargé en effluents est envoyée dans un autre réacteur ($2_2$,..., $2_n$) tandis qu'une autre partie est envoyée dans la conduite principale 13, en particulier si les capacités de traitement des réacteurs $2_1$ à $2_n$ sont différentes.

Par ailleurs, du fait de la présence des vannes (20, 21), il est possible de faire fonctionner le centre de traitement de gaz 1 même si un réacteur ($2_1$, $2_2$,..., $2_n$) est hors service. Il suffit dans ce cas de fermer les vannes (20, 21) du réacteur hors service, par exemple le m-ième. Il faut également fermer la vanne 21 du (m-1)-ième réacteur et fermer l'alimentation $5_m$ en alumine fraîche du filtre m.

Selon une première forme préférentielle de réalisation, le centre de traitement gazeux 1 fonctionne alors selon l'art antérieur, le ou les réacteur(s) hors service étant alors déconnecté(s) des autres réacteurs et aucun flux gazeux ne circulant au travers eux. Pour ce faire, des moyens de coupure de flux gazeux sont avantageusement prévus et sont de type connus en soi. Le centre de traitement gazeux 1 fonctionne alors selon le principe tel que décrit dans la figure 1. Toutes les vannes 21 de tous les réacteurs $(2_1, ..., 2_n)$ sont alors fermées et toutes les vannes 20 sont ouvertes pour tous les réacteurs $(2_1, ..., 2_n)$ sauf le réacteur $2_m$. L'alimentation 5a est fermée pour éviter la suralimentation pour ainsi obtenir une équi répartition des débits, les alimentations $5_1$ à $5_n$ déversent alors la même quantité d'alumine fraîche dans les conduites d'alimentation 6 à l'exception de la m-ième alimentation $5_m$ qui est fermée.

De manière alternative, il est prévu des conduites de dérivation de la matière pulvérulente, de type connues en soi, permettant d'éviter le ou les réacteur(s) hors service. Le centre de traitement gazeux 1 fonctionne alors selon le principe de cascade de l'invention, l'agent de sorption et/ou de neutralisation chimique ne circulant pas dans le ou les réacteur(s) hors service, mais circulant dans les autres réacteurs.

Alternativement, il est réalisé des moyens de dérivation pour l'obtention d'une cascade de recyclage de l'agent de sorption et/ou de neutralisation chimique de (n-m) réacteurs, les autres réacteurs ne faisant pas partie de la cascade formant une seconde cascade de recyclage de l'agent de sorption et/ou de neutralisation chimique. Ainsi, si un réacteur est hors service, il est formé deux sous-cascades fonctionnant selon le principe de l'invention. De même, si deux réacteurs sont hors service, il est formé deux ou trois sous-cascades (cela dépend si les deux réacteurs hors service sont disposés l'un à côté de l'autre dans la cascade), et ainsi de suite en fonction du nombre de réacteurs hors service.

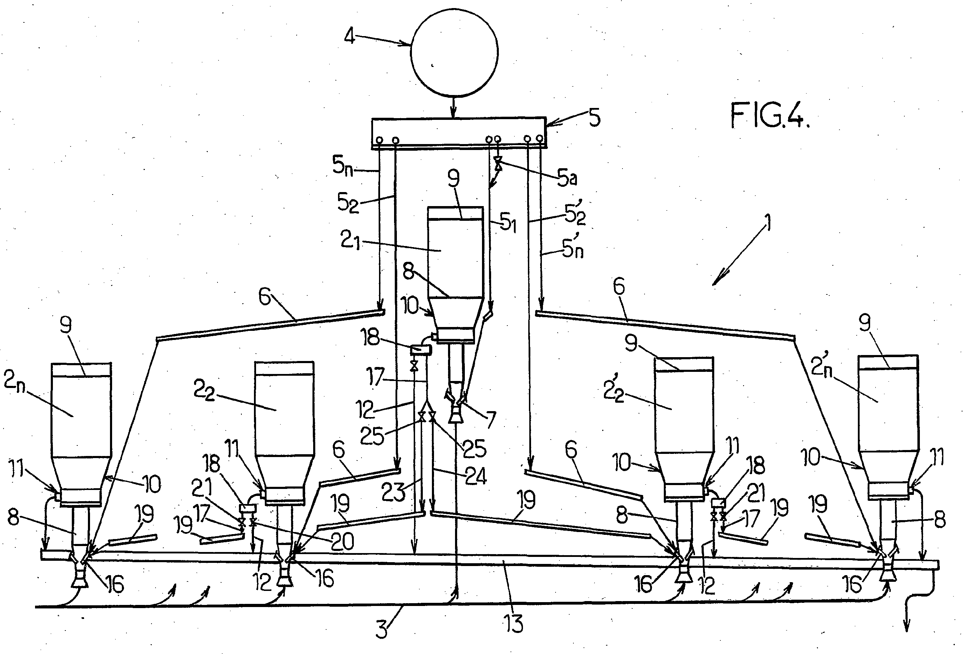

La figure 4 représente une troisième forme de réalisation du centre de traitement de gaz 1 selon l'invention.

Ce mode de réalisation reprend le principe du mode de réalisation tel que décrit dans la figure 3 à l'exception du fait que le premier réacteur $2_1$ suralimenté en agent de sorption et/ou de neutralisation chimique frais déverse l'agent de sorption et/ou de neutralisation chimique chargé en effluents dans la seconde conduite 17 qui à son tour se divise en deux conduites (23, 24) reliée chacune à une aéroglissière secondaire 19.

Ainsi, le premier réacteur $2_1$ alimente en matières recyclées deux séries de réacteurs $((2_2,...., 2_n)$ et $(2'_2,..., 2'_n))$ par l'intermédiaire de la seconde conduite 17.

Chaque conduite (23, 24) issue de la division de la seconde conduite 17 présente une vanne 25 permettant d'ouvrir ou de fermer de manière préférentielle l'alimentation en matières recyclées de l'une des deux séries de réacteurs $((2_2,..., 2_n)$ et $(2'_2,..., 2'_n))$.

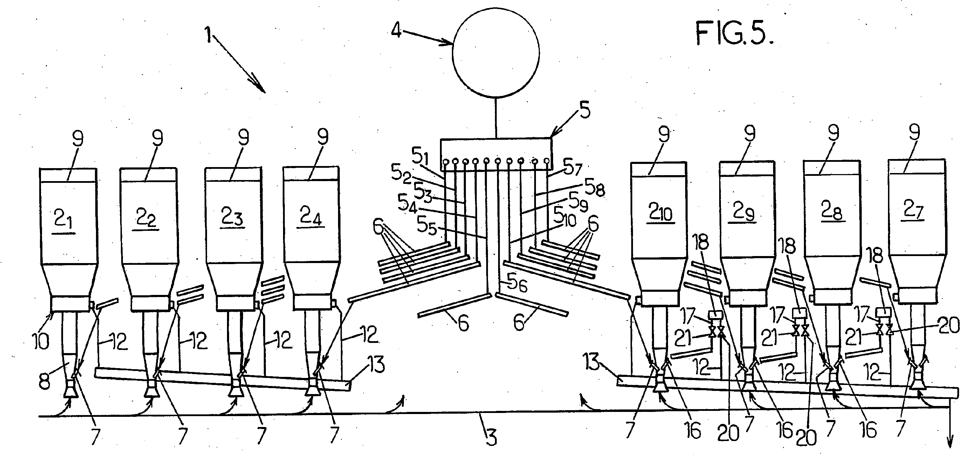

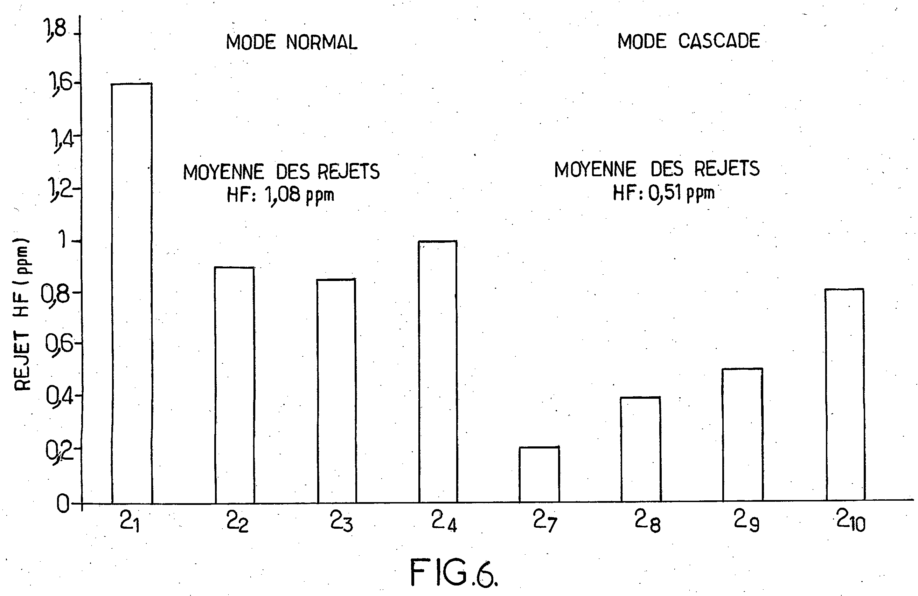

La figure 5 est une représentation schématique d'un centre de traitement gazeux fonctionnant en partie selon l'art antérieur et en partie selon la deuxième forme de réalisation de l'invention, la figure 6 illustrant les rejets obtenus en HF après passage dans les différentes parties de ce centre.

Il a été ainsi comparé les rejets en HF obtenus à partir d'un site en traitement de gaz comprenant 10 réacteurs $(2_1, 2_2, 2_3, 2_4, 2_5, 2_6, 2_7, 2_8, 2_9, 2_{10})$. Afin de permettre cette comparaison, quatre réacteurs $(2_1, 2_2, 2_3, 2_4)$ ont été alimentés dans un mode selon l'art antérieur tel que décrit dans la figure 1, c'est-à-dire avec une quantité égale d'alumine fraîche. Ainsi, si X désigne la quantité totale d'alumine fraîche fournie à l'ensemble des réacteurs du centre de traitement de gaz, alors les quatre premiers réacteurs ont été alimentés avec une quantité de X/10.

Quatre autres réacteurs $(2_7, 2_8, 2_9, 2_{10})$ ont été alimentés selon le mode de fonctionnement tel que décrit dans la figure 3 de manière à former une cascade de quatre réacteurs $(2_7, 2_8, 2_9, 2_{10})$. Plus précisément, et à titre d'exemple, le premier réacteur $2_7$ de la série a été suralimenté en alumine fraîche par rapport aux autres réacteurs $(2_8, 2_9, 2_{10})$ de la cascade. Avantageusement, le premier réacteur $2_7$ de la série reçoit 70% de 4X/10 en alumine fraîche, le deuxième réacteur $2_8$ de la série reçoit toute l'alumine chargée en effluents du premier réacteur $2_7$ de la cascade et reçoit en plus 20% de 4X/10 en alumine fraîche. Le troisième réacteur $2_9$ de la série ne reçoit que 10% de 4X/10 en alumine fraîche des moyens de distribution 5 mais également l'intégralité de l'alumine chargée en effluents issue du réacteur $2_8$ et le quatrième et dernier réacteur $2_{10}$ de la série ne reçoit pas d'alumine fraîche des moyens de distribution 5 mais reçoit l'intégralité de l'alumine chargée en effluents issue du réacteur $2_9$.

Selon le mode de réalisation tel que décrit dans la figure 5, ainsi que pour les modes de réalisation décrits dans les figures 3 et 4, il est prévu dans chacun des réacteurs $(2_1, ..., 2_n)$ un recyclage interne de l'agent de sorption et/ou de neutralisation chimique du fait notamment de la présence d'une trémie telle que précédemment décrite dans le brevet FR 2 692 497, par exemple.

Les rejets en HF ont alors été mesurés pour ces huit réacteurs. Il a été alors constaté que la moyenne des rejets pour les quatre réacteurs $(2_1, 2_2, 2_3, 2_4)$ fonctionnant selon l'art antérieur est de 1.08 ppm et que la moyenne des rejets en HF pour les quatre réacteurs $(2_7, 2_8, 2_9, 2_{10})$ fonctionnant selon un mode de cascade est de 0.51 ppm, le premier réacteur $2_7$ de la cascade rejetant moins de HF par rapport au quatrième réacteur $2_{10}$ de la cascade.

Il a été ainsi prouvé que les rejets globaux en HF sont diminués avec un fonctionnement des réacteurs selon le mode de fonctionnement de l'invention.

Il a donc été découvert que le recyclage de l'agent de sorption et/ou de neutralisation chimique d'un réacteur à un autre permet d'obtenir de meilleurs rendements d'épuration des flux gazeux par rapport aux dispositifs selon l'art antérieur.

De manière alternative, il est également envisageable de prévoir un ensemble de n réacteurs avec deux réacteurs ou plus alimentés exclusivement en alumine fraîche, les autres réacteurs fonctionnant selon le mode de fonctionnement décrit dans la figure 2.

De même, il est également prévu de suralimenter deux réacteurs ou plus par rapport aux autres réacteurs du centre de traitement de gaz, les autres réacteurs fonctionnant alors selon le mode de fonctionnement tel que décrit dans la figure 3.

Dans le cas de figure où les réacteurs $2_1$ et $2_n$ sont suralimentés en alumine fraîche par rapport aux autres réacteurs, le débit d'alumine fraîche par réacteur peut être écrit avec les formules suivantes :

$$B_1 = B_n = f_1 \cdot \overline{M} \ \text{avec } 1 \leq f_1 \leq \frac{n}{2}$$

$B_i = f_i \cdot \overline{M}$ avec $0 \leq f_i \leq 1$ pour $2 \leq i \leq n-1$

Avec $\sum_{i=1}^{i=n} f_i = n$ et avec $f_i$ réel positif ou nul

En conclusion, les différentes formes de réalisation de l'invention permettent l'obtention d'un rendement d'épuration des effluents gazeux au moins aussi bon que les dispositifs de l'art antérieur tout en laissant la possibilité de diminuer la quantité d'agent de sorption et/ou de neutralisation chimique à utiliser pour l'obtention de ces rendements.

De plus, le principe de la présente invention s'applique également à des centres de traitement de gaz avec des réacteurs de capacités de traitement différentes.

**Revendications**

1. Groupe d'au moins deux réacteurs ($2_1$, $2_2$, $2'_2$, ..., $2_n$, $2'_n$) à flux gazeux (3), de préférence ascendant, alimentés d'une part en parallèle en flux gazeux (3) à épurer et d'autre part en un agent de sorption et/ou de neutralisation chimique du type matière pulvérulente apte à adsorber des effluents présents dans ledit flux gazeux (3) par mise en contact dudit agent avec ledit flux gazeux (3), chacun desdits réacteurs ($2_1$, $2_2$, $2'_2$, ..., $2_n$, $2'_n$) présentant

   a) des moyens d'injection (7, 16) dudit agent dans le réacteur considéré ;
   b) des moyens de collecte (10) dudit agent après mise en contact avec ledit flux gazeux (3), dans ledit réacteur considéré ; et
   c) des moyens d'évacuation (11) dudit agent collecté, après mise en contact avec ledit flux gazeux (3) dans ledit réacteur considéré, et reliés auxdits moyens de collecte (10) correspondants, **caractérisé en ce que** lesdits moyens d'évacuation (11) de chaque réacteur sont reliés auxdits moyens d'injection (16) d'au moins un autre réacteur, de sorte que ledit agent collecté après mise en contact avec ledit flux gazeux dans chaque réacteur est à nouveau mis en contact avec ledit flux gazeux dans ledit au moins un autre réacteur sauf pour au moins un réacteur du groupe, dont les moyens d'évacuation (11) alimentent en agent mis en contact avec ledit flux gazeux une conduite d'évacuation (13) vers l'un au moins d'un recyclage et d'un stockage dudit agent.

2. Groupe selon la revendication 1, **caractérisé en ce qu'**au moins un réacteur ($2_1$) est suralimenté (5a) en agent de sorption et/ou de neutralisation chimique issu de moyens de stockage (4) d'agent en matière pulvérulente fraîche par rapport aux autres réacteurs dudit groupe ($2_2$, $2'_2$, ..., $2_n$, $2'_n$).

3. Groupe selon la revendication 2, **caractérisé en ce que** ledit au moins un réacteur ($2_1$) suralimenté en agent en matière pulvérulente fraîche évacue à l'aide de ses moyens d'évacuation (11) au moins une partie de ladite matière pulvérulente chargée en effluents après mise en contact avec le flux gazeux (3) dans ledit réacteur (21) suralimenté vers au moins un autre réacteur ($2_2$, $2'_2$, ..., $2_n$, $2'_n$) dudit groupe.

4. Groupe selon la revendication 2 ou 3, **caractérisé en ce que** tous les réacteurs ($2_1$, $2_2$, $2'_2$, ..., $2_n$, $2'_n$) dudit groupe sont alimentés en parallèle en agent en matière pulvérulente fraîche à partir desdits moyens de stockage (4) et **en ce que** chacun desdits autres réacteurs ($2_2$, $2'_2$, ..., $2_n$, $2'_n$) dudit groupe est alimenté en agent en matière pulvérulente fraîche dans une quantité qui est une partie de la fraction d'agent en matière pulvérulente fraîche alimentant ledit réacteur suralimenté ($2_1$).

5. Groupe selon la revendication 1, **caractérisé en ce qu'**au moins un réacteur ($2_1$) est alimenté exclusivement en agent de sorption et/ou de neutralisation chimique issu de moyens de stockage (4) en agent en matière pulvérulente fraîche et **en ce que** le ou les autres réacteurs ($2_2$,..., $2_n$) dudit groupe ne sont pas alimentés en agent en matière pulvérulente fraîche issu des moyens de stockage (4).

6. Groupe selon la revendication 5, **caractérisé en ce que** ledit au moins un réacteur ($2_1$) alimenté exclusivement en agent en matière pulvérulente fraîche évacue à l'aide de ses moyens d'évacuation (11) dudit agent de sorption et/ou de neutralisation chimique chargé en effluents après mise en contact avec le flux gazeux (3) dans ledit au moins un réacteur (21) vers au moins un autre réacteur ($2_2$,..., $2_n$) dudit groupe.

7. Groupe selon la revendication 5 ou 6, **caractérisé en ce que** lesdits autres réacteurs ($2_2$,...., $2_n$) dudit groupe sont alimentés en série en agent de sorption et/ou dé neutralisation chimique chargé en effluents provenant pour chacun d'eux des moyens d'évacuation (11) du réacteur ($2_1$, $2_2$, ..., $2_{n-1}$) immédiatement en amont dans la série.

8. Groupe selon l'une des revendications précédentes, **caractérisé en ce que** lesdits moyens d'évacuation (11) d'au moins un réacteur sont reliés auxdits moyens d'injection (16), d'au moins un autre réacteur par des moyens de convoyage comprenant au moins une aéroglissière (19).

9. Groupe selon l'une des revendications 1 à 4, **caractérisé en ce que** lesdits moyens d'évacuation (11) desdits au moins deux réacteurs ($2_1$, $2_2$, $2'_2$, ..., $2_n$, $2'_n$) sont reliés à une conduite d'évacuation commune (13) auxdits au moins deux réacteurs ($2_1$, $2_2$, $2'_2$, ..., $2_n$, $2'_n$).

10. Centre de traitement de gaz (1) constitué d'au moins un groupe de réacteurs selon l'une des revendications précédentes.

11. Procédé d'épuration d'un flux gazeux (3) par mise en contact dudit flux avec un agent de sorption et/ou de neutralisation chimique du type matière pulvérulente à l'aide d'au moins un groupe d'au moins deux réacteurs ($2_1$, $2_2$, $2'_2$, ..., $2_n$, $2'_n$) alimentés en parallèle en flux gazeux, **caractérisé en ce qu'**il comprend une étape d'évacuation d'agent de sorption et/ou de neutralisation chimique, après mise en contact avec ledit flux gazeux (3) dans au moins un desdits réacteurs, dans au moins un autre desdits au moins deux réacteurs ($2_1$, $2_2$, $2'_2$, ..., $2_n$, $2'_n$) dans lequel ledit agent évacué est à nouveau mis en contact avec ledit flux gazeux.

12. Procédé selon la revendication 11, **caractérisé en ce qu'**il est utilisé avec, comme matière pulvérulente, de l'alumine $Al_2O_3$ qui est mise en contact avec un gaz issu de cuves d'électrolyse d'aluminium.

**Patentansprüche**

1. Gruppe aus mindestens zwei Reaktoren ($2_1$, $2_2$, $2'_2$, ..., $2_n$, $2'_n$) für einen vorzugsweise aufsteigenden Gasstrom (3), die einerseits parallel mit dem zu reinigenden Gasstrom (3) und andererseits mit einem chemischen Sorptions- und/oder Neutralisierungsmittel von der Art eines pulverförmigen Stoffs, das geeignet ist, im Gasstrom (3) vorhandene Abgänge durch Inkontaktbringen des Mittels mit dem Gasstrom (3) zu adsorbieren, versorgt werden, wobei jeder der Reaktoren ($2_1$, $2_2$, $2'_2$, ..., $2_n$, $2'_n$) Folgendes aufweist:

a) Einrichtungen (7, 16) zur Injektion des Mittels in den betreffenden Reaktor;
b) Einrichtungen (10) zur Sammlung des Mittels nach dem Inkontaktbringen mit dem Gasstrom (3) im betreffenden Reaktor und
c) Einrichtungen (11) zur Ableitung des gesammelten Mittels nach dem Inkontaktbringen mit dem Gasstrom (3) im betreffenden Reaktor, die mit den entsprechenden Sammeleinrichtungen (10) verbunden sind, **dadurch gekennzeichnet, dass** die Ableitungseinrichtungen (11) jedes Reaktors mit den Injektionseinrichtungen (16) mindestens eines anderen Reaktors verbunden sind, sodass das nach dem Inkontaktbringen mit dem Gasstrom in jedem Reaktor gesammelte Mittel in dem mindestens einen anderen Reaktor erneut mit dem Gasstrom in Kontakt gebracht wird, mit Ausnahme mindestens eines Reaktors der Gruppe, dessen Ableitungseinrichtungen (11) eine Ableitung (13) zu mindestens einer Wiederverwertung und/oder einer Lagerung des Mittels mit dem Gasstrom, der mit dem Mittel in Kontakt gebracht wurde, versorgen.

2. Gruppe nach Anspruch 1, **dadurch gekennzeichnet, dass** mindestens ein Reaktor ($2_1$) mit chemischem Sorptions- und/oder Neutralisierungsmittel aus Einrichtungen (4) zur Lagerung eines frischen Mittels aus pulverförmigem Stoff gegenüber den anderen Reaktoren der Gruppe ($2_2$, $2'_2$, ..., $2_n$, $2'_n$), aufgeladen wird.

3. Gruppe nach Anspruch 2, **dadurch gekennzeichnet, dass** der mindestens eine Reaktor ($2_1$), der mit frischem Mittel aus pulverförmigem Stoff aufgeladen wurde, mit Hilfe seiner Ableitungseinrichtungen (11) mindestens einen Teil des pulverförmigen Stoffs, der nach dem Inkontaktbringen mit dem Gasstrom (3) im aufgeladenen Reaktor ($2_1$) mit Abgängen angereichert ist, zu mindestens einem anderen Reaktor ($2_2$, $2'_2$, ..., $2_n$, $2'_n$) der Gruppe ableitet.

4. Gruppe nach Anspruch 2 oder 3, **dadurch gekennzeichnet, dass** alle Reaktoren ($2_1$, $2_2$, $2'_2$, ..., $2_n$, $2'_n$) der Gruppe parallel mit frischem Mittel aus pulverförmigem Stoff aus den Lagerungseinrichtungen (4) versorgt werden, und dadurch, dass jeder der anderen Reaktoren ($2_2$, $2'_2$, ..., $2_n$, $2'_n$) der Gruppe in einer Menge mit frischem Mittel aus pulverförmigem Stoff versorgt wird, die ein Bruchteil des frischen Mittels aus pulverförmigem Stoff zur Versorgung des aufgeladenen Reaktors ($2_1$) ist.

5. Gruppe nach Anspruch 1, **dadurch gekennzeichnet, dass** mindestens ein Reaktor ($2_1$) ausschließlich mit chemischen Sorptions- und/oder Neutralisierungsmittel aus Lagerungseinrichtungen (4) für frisches Mittel aus pulverförmigem Stoff versorgt wird, und dadurch, dass der bzw. die anderen Reaktoren ($2_2$, ..., $2_n$) der Gruppe nicht mit frischem Mittel aus pulverförmigem Stoff aus den Lagerungseinrichtungen (4) versorgt werden.

6. Gruppe nach Anspruch 5, **dadurch gekennzeichnet, dass** der mindestens eine Reaktor ($2_1$), der ausschließlich mit frischem Mittel aus pulverförmigem Stoff versorgt wird, mit Hilfe seiner Ableitungseinrichtungen (11) chemisches Sorptions- und/oder Neutralisierungsmittel, das nach dem Inkontaktbringen mit dem Gasstrom (3) im mindestens einen Reaktor ($2_1$) angereichert ist, zu mindestens einem anderen Reaktor ($2_2$, ..., $2_n$) der Gruppe ableitet.

7. Gruppe nach Anspruch 5 oder 6, **dadurch gekennzeichnet, dass** die anderen Reaktoren ($2_2$, ..., $2_n$) der Gruppe in Reihe mit chemischem Sorptions- und/oder Neutralisierungsmittel versorgt werden, das mit Abgängen angereichert ist, die für jeden von ihnen aus den Ableitungseinrichtungen (11) des in der Reihe unmittelbar davorgeschalteten Reaktors ($2_1$, $2_2$, ..., $2_{n-1}$) stammen.

8. Gruppe nach einem der vorangehenden Ansprüche, **dadurch gekennzeichnet, dass** die Ableitungseinrichtungen (11) mindestens eines Reaktors mittels Fördereinrichtungen, die mindestens eine pneumatische Rinne (19) umfassen, mit den Injektionseinrichtungen (16) mindestens eines anderen Reaktors verbunden sind.

9. Gruppe nach einem der Ansprüche 1 bis 4, **dadurch gekennzeichnet, dass** die Ableitungseinrichtungen (11) der mindestens zwei Reaktoren ($2_1$, $2_2$, $2'_2$, ..., $2_n$, $2'_n$) mit einer für die mindestens zwei Reaktoren ($2_1$, $2_2$, $2'_2$, ..., $2_n$, $2'_n$) gemeinsamen Ableitung (13) verbunden sind.

10. Gasbehandlungsanlage (1), ausgebildet aus mindestens einer Gruppe von Reaktoren nach einem der vorangehenden Ansprüche.

11. Verfahren zur Reinigung eines Gasstroms (3) durch Inkontaktbringen des Stroms mit einem chemischen Sorptions- und/oder Neutralisierungsmittel von der Art eines pulverförmigen Stoffs mit Hilfe mindestens einer Gruppe aus mindestens zwei Reaktoren ($2_1$, $2_2$, $2'_2$, ..., $2_n$, $2'_n$), die parallel mit dem Gasstrom versorgt werden, **dadurch gekennzeichnet, dass** es einen Schritt der Ableitung von chemischem Sorptions- und/oder Neutralisierungsmittel nach dem Inkontaktbringen mit dem Gasstrom (3) in mindestens einem der Reaktoren in mindestens einen anderen der mindestens zwei Reaktoren ($2_1$, $2_2$, $2'_2$, ..., $2_n$, $2'_n$), in dem das abgeleitete Mittel erneut mit dem Gasstrom in Kontakt gebracht wird, umfasst.

12. Verfahren nach Anspruch 11, **dadurch gekennzeichnet, dass** es mit Aluminiumoxid, $Al_2O_3$, als pulverförmigem Stoff, das mit einem aus Aluminiumelektrolysewannen stammenden Gas in Kontakt gebracht wird, eingesetzt wird.

**Claims**

1. Group of at least two reactors ($2_1$, $2_2$, $2'_2$, ..., $2_n$, $2'_n$) with a preferably ascending gas-flow (3), supplied in parallel with a gas flow (3) to be purified, on the one hand, and a chemical sorption and/or neutralising agent of the powdery type capable of adsorbing effluents present in said gas flow (3) by bringing said agent into contact with said gas flow (3), on the other hand, each of said reactors ($2_1$, $2_2$, $2'_2$, ..., $2_n$, $2'_n$) comprising

    a) means (7, 16) for injecting said agent into the respective reactor;
    b) means (10) for collecting said agent after having been brought into contact with said gas flow (3) in said respective reactor; and
    c) means (11) for discharging said agent collected after having been brought into contact with said gas flow (3) in said respective reactor, and connected to said co-operating collection means (10), **characterised in that** said discharge means (11) of every reactor are connected to said injection means (16) of at least one other reactor so that said agent collected after having been brought into contact with said gas flow in each reactor is again brought into contact with said gas flow in said at least one other reactor, with the exception of at least one reactor of the group, the discharge means (11) of which supply agent that has been brought into contact with said gas flow to a line (13) discharging to at least one unit for recycling and storing said agent.

2. Group as claimed in claim 1, **characterised in that**, compared with the other reactors in said group ($2_2$, $2'_2$, ..., $2_n$, $2'_n$), at least one reactor ($2_1$) is over-supplied (5a) with chemical sorption and/or neutralising agent arriving from means (4) for storing fresh powdery agent.

3. Group as claimed in claim 2, **characterised in that** said at least one reactor ($2_1$) over-supplied with fresh powdery agent discharges via its discharge means (11) at least some of said powdery agent entraining effluents after having been brought into contact with the gas flow (3) in said over-supplied reactor ($2_1$) to at least one other reactor ($2_2$, $2'_2$, ..., $2_n$, $2'_n$) of said group.

4. Group as claimed in claim 2 or 3, **characterised in that** all of the reactors ($2_1$, $2_2$, $2'_2$, ..., $2_n$, $2'_n$) of said group are supplied in parallel with fresh powdery agent from said storage means (4) and each of said other reactors ($2_2$, $2'_2$, ..., $2_n$, $2'_n$) of said group is supplied with fresh powdery agent in a quantity which is a part of the fraction of fresh powdery agent supplying said over-supplied reactor ($2_1$).

5. Group as claimed in claim 1, **characterised in that** at least one reactor ($2_1$) is supplied exclusively with fresh chemical sorption and/or neutralising agent from means (4) for storing fresh powdery agent, and the other reactor or reactors ($2_2$, ..., $2_n$,) of said group are not supplied with fresh powdery agent from the storage means (4).

6. Group as claimed in claim 5, **characterised in that** said at least one reactor ($2_1$) supplied exclusively with fresh powdery agent discharges via its discharge means (11) said chemical sorption and/or neutralising agent entraining effluents after having been brought into contact with the gas flow (3) in said at least one reactor ($2_1$) to at least one other reactor ($2_2$, ..., $2_n$) of said group.

7. Group as claimed in claim 5 or 6, **characterised in that** said other reactors ($2_2$, ..., 2n) of said group are supplied in series with chemical sorption and/or neutralising agent entraining effluents, arriving in each case from the discharge means (11) of the reactor ($2_1$, $2_2$, $2'_2$, ..., $2_{n-1}$) immediately upstream in the series.

8. Group as claimed in one of the preceding claims, **characterised in that** said discharge means (11) of at least one reactor are connected to said injection means of at least one other reactor via conveyor means comprising at least one air slide (19).

9. Group as claimed in one of claims 1 to 4, **characterised in that** said discharge means (11) of said at least two reactors ($2_1$, $2_2$, $2'_2$, ..., $2_n$, $2'_n$) are connected to a common line (13) discharging to said at least two reactors ($2_1$, $2_2$, $2'_2$, ..., $2_n$, $2'_n$).

10. Gas treatment centre (1) comprising at least one group of reactors as claimed in one of the preceding claims.

11. Method of purifying a gas flow (3) by bringing said flow into contact with a chemical sorption and/or neutralising agent of the powdery type with the aid of at least one group of at least two reactors ($2_1$, $2_2$, $2'_2$, ..., $2_n$, $2'_n$) supplied in parallel with gas flows, **characterised in that** it comprises a step of discharging chemical sorption and/or neutralising agent, after having been brought into contact with said gas flow (3) in at least one of said reactors, to at least one other of said at least two reactors ($2_1$, $2_2$, $2'_2$, ..., $2_n$, $2'_n$) in which said discharged agent is again brought into contact with said gas flow.

12. Method as claimed in claim 11, **characterised in that** it is operated with aluminium $Al_2O_3$ as the powdery agent which is brought into contact with a gas arriving from aluminium electrolytic cells.

# FIG.1.
## ÉTAT DE LA TECHNIQUE

# FIG.3.

FIG.2.

FIG.4.

FIG.5.

FIG.6.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2139648
- FR 2692497
- FR 2310151
- US 3093465 A
- EP 0793527 A